# EUROPÄISCHE PATENTANMELDUNG

(11) **EP 0 753 906 A2**
(43) Veröffentlichungstag der Anmeldung: **15.01.1997**
(21) Anmeldenummer: 96110994.9
(22) Anmeldetag: 09.07.1996
(51) Int. Cl.: H01R 13/66, G02B 6/24

(54) **Elektrische Steckvorrichtung**

(30) Priorität: 11.07.1995 DE 19525214
(71) Anmelder: Gebrüder Merten GmbH & Co. KG, D-51674 Wiehl (DE)
(72) Erfinder: Erbse, Karl-Ulrich, Dipl.-Phys., 51647 Gummersbach (DE); Gringmann, Klaus, 51647 Gummersbach (DE); Schmidt, Helmut, Dipl.-Ing., 51647 Gummersbach (DE); Stefanski, Manfred, Dipl.-Ing., 51647 Gummersbach (DE); Vicktorius, Richard, Dipl.-Ing., 50759 Köln (DE)
(74) Vertreter: Selting, Günther, Dipl.-Ing.

(57) **Zusammenfassung**

Die Steckvorrichtung besteht aus einem Stecker (8) und einer Steckdose (10), wobei der Stecker in verschiedenen Einsteckstellungen in die Steckdose einsteckbar ist. Die Steckvorrichtung ist für die übliche elektrische Kontaktaufnahme zwischen Stecker und Steckdose ausgebildet. Zusätzlich ist eine Datenübertragung per Lichtleiter über die Steckvorrichtung vorgesehen. Um die Datenübertragung in jeder Einsteckstellung des Steckers (8) zu gewährleisten, besitzt die Steckdose (10) wenigstens eine Lichtöffnung (3,4,5) mehr als der Stecker (8) optische Leitungsadern (13,14) und wenigstens zwei Lichtöffnungen (3,4,5) sind zum Einkoppeln oder zum Auskoppeln von Licht vorgesehen, von denen eine Lichtöffnung (5) mit einer Lichtöffnung (2) des Steckers (8) in einer Einsteckstellung und eine andere Lichtöffnung (3) mit der Lichtöffnung (2) des Steckers (8) in einer anderen Einsteckstellung gekoppelt, z.B. in Deckung gebracht, ist. Diejenigen Lichtöffnungen (3,4,5), die zum Einkoppeln oder Auskoppeln von Licht bestimmt sind, sind ggf. über je einen Lichtleiter (70,71,72) mit je einem Lichtempfänger oder Lichtsender eines optoelektrischen Wandlers gekoppelt.

## Beschreibung

Die Erfindung bezieht sich auf eine elektrische Steckvorrichtung, bestehend aus Steckdose und Stecker, deren Konfiguration der elektrischen Steckkontakte das Einstecken des Steckers in wenigstens zwei Stellungen erlaubt, wobei der Stecker mit einer Leitung verbindbar ist, die außer den elektrischen Leitungsadern noch wenigstens eine optische Leitungsader enthält, die jeweils an einen Lichtein- und/oder Lichtaustritt des Steckers angekoppelt ist und durch die Lichtsignale in die Steckdose und/oder von der Steckdose gesendet werden können.

Eine derartige Steckvorrichtung soll den Zweck erfüllen, ein externes Gerät, beispielsweise eine Waschmaschine, an das Stromnetz (Hausnetz) und gleichzeitig an einen elektrischen Steuerbus anzuschließen, wobei zur Vermeidung von Störeinstreuungen von der Netzspannung die Signalübertragung von der Steckdose bis zum externen Gerät auf optischem Wege erfolgt.

Während eine elektrische Signalleitung, die zusammen mit einer Versorgungsleitung in einem gemeinsamen Leitungsstrang eingebettet ist, von der Versorgungsleitung gestört wird, werden optische Signale durch Ströme oder Spannungen nicht beeinflußt.

In der DE 32 26 265 A1 ist eine flexible elektrische Leitung beschrieben, die außer den elektrischen Leitern für den Netzanschluß eines Gerätes noch einen Lichtleiter enthält, über den optische Signale übertragen werden können.

In der DE 32 27 770 C2 ist eine elektrische Steckvorrichtung mit einer Steckdose und einem Stecker beschrieben, die den Anschluß einer flexiblen Netzleitung an eine fest installierte Netzleitung ermöglicht und außerdem einen gebäudeseitig installierten Lichtwellenleiter mit einem Lichtwellenleiter der anzuschließenden flexiblen Leitung optisch verbindet. Hierzu ist wenigstens ein Kontaktteil der elektrischen Steckvorrichtung zugleich als Lichtwellenleiter-Steckvorrichtung ausgebildet.

Die Steckvorrichtung verbindet den elektrischen und den optischen Teil einer Leitung mit den gebäudeseitigen elektrischen Versorgungsleitungen und den optischen Datenleitungen. Die Konfiguration der elektrischen Steckkontakte in Verbindung mit mechanischen Profilierungen erlaubt das Einstecken des Steckers in die Steckdose in zwei unterschiedlichen Stellungen, so daß darauf zu achten ist, daß die optische Verbindung zwischen Stekker und Steckdose nicht unterbrochen ist.

Zum Fernschalten, Fernsteuern, Regeln und Überwachen von Geräten werden elektrische Bussysteme verwendet, die an den Enden der Busleitungen Busankoppler besitzen, an die ggf. über Schnittstellen die Steuerein- oder ausgänge der Geräte anschließbar sind. Die Busankoppler können komplexe elektronische Schaltungsanordnungen mit einem Mikroprozessor enthalten und sind in der Lage, Datentelegramme zu erzeugen und zu senden sowie zu empfangen und auszuwerten, ferner ankommende Steuerbefehle zu verarbeiten. Ein derartiges Bussystem für die Gebäudesystemtechnik ist in der EP 0 344 609 B1 beschrieben.

Die Aufgabe der Erfindung besteht darin, eine Steckvorrichtung für den gleichzeitigen Anschluß eines elektrischen Gerätes an das Stromnetz und an ein elektrisches Busleitungssystem zu schaffen, die die Übertragung von Lichtsignalen ermöglicht, wobei die Übertragung von Lichtsignalen in jeder möglichen Einsteckstellung des Steckers in der Steckdose gewährleistet ist.

Die Aufgabe wird erfindungsgemäß mit den Merkmalen des Anspruches 1 gelöst. Weiterbildungen der Erfindung sind in den Unteransprüchen beschrieben.

Die erfindungsgemäße Steckvorrichtung ist generell auf der Grundlage üblicher Steckvorrichtungen für die Netzversorgung ausgebildet. Übliche Steckvorrichtungen für Versorgungsleitungen erlauben das Einstecken des Stekkers in die Steckdose in zwei unterschiedlichen Stellungen, die sich voneinander durch eine um 180° gedrehte Winkellage unterscheiden. Für den Betrieb und die Stromversorgung von Geräten hat diese Option keinen Einfluß. Für die Integration von Hausgeräten, beispielsweise Waschmaschinen, Trocknern, Gefriergeräten oder dgl. in ein elektronisches Datenübertragungssystem, beispielsweise elektrisches Bussystem, sind zusätzlich Leitungen (Steuerleitungen) zum externen Gerät erforderlich. Trotzdem soll dadurch der Anschluß eines Gerätes genauso unproblematisch bleiben wie bisher, wobei das vorübergehende oder dauerhafte Entfernen des Gerätes, z.B. zu Reinigungszwecken, aus dem Bussystem vom Benutzer selbst durch Ziehen des Netzsteckers erfolgen soll. Daraus folgt, daß Versorgungsleitungen und Steuerleitungen vorteilhaft gemeinsam in einem Leitungsstrang von der Steckdose bis zum externen Gerät verlaufen. Aus Gründen der Störsicherheit und Betriebssicherheit der Geräte sind die Steuerleitungen als Lichtleiter ausgebildet, und der Lichtaustausch erfolgt durch die elektrische Steckvorrichtung hindurch.

Im Gegensatz zu der elektrischen Steckverbindung, bei der die jeweilige Einsteckstellung des Steckers in der Steckdose keine Rolle spielt, erzwingt eine benutzerfreundliche Integration des Gerätes in das Bussystem ebenfalls eine Lösung, mit der in jeder möglichen Stellung des Steckers in der Steckdose ein Lichtaustausch erfolgt, ohne daß erst durch Probieren die 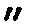 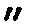 richtige" Steckerstellung gefunden werden muß. Hierbei geht die Erfindung davon aus, daß die zentrische Anordnung eines Lichtleiters zu den elektrischen Steckkontakten in manchen Fällen nicht ausreicht und an Stelle nur eines Lichtleiters zwei oder mehr Lichtleiter vorhanden sind, von denen jeder zur Übertragung von Signalen belegt ist. Selbst wenn nur ein Lichtleiter zur Übertragung ausreichen würde, könnten konstruktive Gründe (Befestigungsschraube) dazu zwingen, den Lichtaustritt unsymmetrisch zu den elektrischen Steckkontakten anzubringen, was dazu führt, daß nur in einer Stellung des Steckens in der Steckdose ein Lichtaustausch erfolgen würde.

Der Vorteil der erfindungsgemäßen Ausbildung besteht darin, daß die Integration von externen Geräten, wie Hausgeräten in ein Bussystem, beispielsweise in ein Bussystem nach der 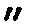 European Installation Busassociation" (EIBA), anwender- und benutzerfreundlich erfolgen kann, wobei das Anschließen und das Trennen vom Bus vom Benutzer des Gerätes selbst durch Stecken oder Ziehen des Netzsteckers erfolgt, so daß gleichzeitig das Gerät Spannung erhält oder spannungslos wird. Ferner braucht der Benutzer beim Stecken des Steckers in die Steckdose nicht darauf zu achten, ob die optische Kopplung der Steckvorrichtung auch ordnungsgemäß erfolgt ist. Viele Benutzer eines Hausgerätes würden bei einem nicht betriebsbereiten Gerät trotz des vermeintlich 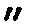 richtig" eingesteckten Steckers in die Steckdose auf ein defektes Gerät tippen und möglicherweise Servicedienste in Anspruch nehmen, wobei doch nur eine Drehung des Stekkers um 180° erforderlich gewesen wäre, um das Gerät in Funktion zu setzen bzw. betreiben zu können.

Ein weiterer Vorteil der erfindungsgemäßen Ausbildung der Steckvorrichtung besteht darin, daß die Steckdose mit entsprechenden Baugruppen oder Bauelementen kombiniert ist, die einen direkten Anschluß an einen Datenbus ermöglichen. In einem Fall kann dies ein optoelektrischer Wandler sein, der die elektrischen Businformationen in optische wandelt oder umgekehrt, so daß die vom elektrischen Bus kommenden Signale in den Lichtleiter eingespeist und die vom Lichtleiter kommenden Signale in den elektrischen Bus eingespeist werden können.

Die Weiterbildung gemäß Anspruch 10 vereinfacht die Installation durch den Wegfall von Verbindungsleitungen von der Steckdose bzw. dem optoelektrischen Wandler zum Busankoppler. Der Busankoppler selbst kann als intelligente (mit µ-Controller) oder passive Version (ohne µ-Controller) ausgebildet sein, so daß im ersten Fall auch der Gerätestandort und Standortveränderungen sowie das Außerbetriebsetzen oder Entfernen des Gerätes über den Bus an eine Zentrale gemeldet werden können. Im übrigen erfolgt die Abwicklung der Datenübertragung vom Bus über den Busankoppler und den Lichtleitern zum externen Gerät, so daß Alarmmeldungen des Gerätes über den Bus geleitet sowie Datum/Uhrzeit angezeigt und programmiert werden können und Gerätespezifikationen wie Geräteart, Gerätetyp, Geräteversion und Identifikationsnummer des Gerätes erfaßbar sind und somit durch Abfrage des Gerätes dessen Status abgefragt werden kann, beispielsweise Gerät angeschlossen oder nicht angeschlossen, Gerät kommunikationsbereit, Gerät abgeschaltet.

Der Schutz der Erfindung erstreckt sich auf die Steckvorrichtung insgesamt und auf den Stecker oder die Steckdose allein. Dementsprechend kann ein erfindungsgemäßer Stecker gemäß Anspruch 3 und eine entsprechende Steckdose gemäß Anspruch 4 ausgebildet sein. Der Stekker einer derartigen Steckvorrichtung nach Anspruch 3 besitzt eine in der Steckerlängsachse liegende (zentrale) Lichtöffnung an der Stirnfläche des Steckers, die mit einem Lichtleiter der Anschlußleitung gekoppelt ist, ferner eine zweite dezentrale Lichtöffnung zur Kopplung mit einem zweiten Lichtleiter der Anschlußleitung, die sich entfernt von der ersten Lichtöffnung befindet. In die eine Lichtöffnung wird Licht eingekoppelt und aus der anderen Lichtöffnung Licht ausgekoppelt. Die Ein- und Auskopplung kann direkt aus den Lichtleitern oder über Linsen erfolgen (Linsenkopplung). Im ersten Fall ist auf die Einhaltung von Toleranzen in Bezug auf die Lage der elektrischen Kontakte (Stifte) besonders zu achten, wie nachfolgend noch näher erläutert wird.

Die Steckdose gemäß Anspruch 4 besitzt in der zum Stekker komplementären Stirnfläche ebenfalls eine zentrale Lichtöffnung, so daß ein entsprechender Stecker nach Anspruch 3 unabhängig von seiner Einsteckoption in der Steckdose stets mit seiner Lichtöffnung der Lichtöffnung der Steckdose gegenüberliegt. Abweichend vom Stekker besitzt die Steckdose noch zwei weitere Lichtöffnungen in ihrer Stirnfläche, von denen stets eine in jeder Einsteckorientierung des Steckers der dezentralen Lichtöffnung des Steckers gegenüberliegt.

Wird von der Steckdose durch ihre zentrale Lichtöffnung Licht eingekoppelt, wird das Licht in jeder Einsteckorientierung des Steckers in seine zentrale Lichtöffnung eingekoppelt. Wird über den Stecker durch seine dezentrale Lichtöffnung Licht eingekoppelt, so wird dieses Licht in jeder Einsteckorientierung des Steckers in der Steckdose in eine von den beiden dezentralen Lichtöffnungen der Steckdose eingekoppelt. Es ist lediglich darauf zu achten, daß der Luftspalt zwischen Stecker und Steckdose möglichst gering ist und ein Versatz der gegenüberliegenden Lichtöffnungen ebenfalls möglichst gering gehalten wird, um die Lichtdämpfung gering zu halten. Unter Beachtung zulässiger Toleranzen kann eine Lichtübertragung über kurze Entfernungen durchaus ohne Linsenkopplung auskommen.

Bei der beschriebenen Anordnung kann durch die zentrale Lichtöffnung der Steckdose durch einen Lichtsender Licht ausgekoppelt oder mit einem Lichtempfänger durch die Lichtöffnung Licht empfangen werden. Im ersten Fall ist dann jede der beiden dezentralen Lichtöffnungen der Steckdose mit je einem Lichtempfänger gekoppelt und beide Lichtempfänger sind parallel zum optoelektrischen Wandler geschaltet, so daß je nach Orientierung des Steckers in der Steckdose je ein Lichtempfänger Licht empfängt und der andere nicht. Im zweiten Fall ist jede der beiden dezentralen Lichtöffnungen der Steckdose mit je einem Lichtsender gekoppelt und beide Lichtsender sind parallel zum optoelektrischen Wandler geschaltet, so daß beide Lichtsender Licht senden, aber nur durch die miteinander gekoppelten Lichtöffnungen von Steckdose und Stecker Licht übertragen wird.

Als Lichtsender kommen lichtemittierende Dioden, auch Laserdioden oder Transistoren, und als Lichtempfänger Fotodioden oder -transistoren in Betracht, die sich unmittelbar in die Lichtöffnungen der Steckdose oder in verhältnismäßig geringem Abstand davon anbringen lassen (Anspruch 5).

Der Aufnahmeraum gemäß Anspruch 6 ermöglicht die Anordnung einer Baugruppe aus Sender und Empfänger auf einer gemeinsamen Platine, die dann auch den optoelektrischen Wandler aufnehmen kann. Der Aufnahmeraum kann als Teil des Steckdosensockels an seiner, den elektrischen Steckkontakten abgewandten, Rückseite angeordnet, beispielsweise dort einstückig angeformt, sein oder Halterungen besitzen, die für die Anbringung eines separaten Zusatzmoduls dienen. Ein derartiges Zusatzmodul kann gemäß Anspruch 11 ausgebildet sein und hat den Vorteil, daß die Lichtöffnungen von Stecker und Steckdose sich auch bei nicht bis zum Anschlag in die Steckdose eingeführten Stecker abstandslos gegenüberliegen.

Durch die beschriebenen Maßnahmen vergrößern sich die Abmessungen der erfindungsgemäßen Anordnung, wie beschrieben, in der Bauhöhe oder in der Länge, insbesondere dann, wenn Busankoppler und Steckvorrichtung kombiniert sind und eine Baueinheit bilden. Vorteilhafte Weiterbildungen hierfür sind in den Ansprüchen 12 und 13 beschrieben.

Ein verhältnismäßig großer Abstand zwischen den Lichtöffnungen und den Lichtsendern und Lichtempfängern kann gemäß Anspruch 14 überbrückt werden.

Die erfindungsgemäße Steckvorrichtung ist als Unterputz- oder Aufputzgerät ausführbar, dessen Einbau in entsprechende Dosen bzw. Gehäuse erfolgt, beispielsweise in von dem Standardmaß abweichende Unterputzdosen, beispielsweise sog. Doppeldosen oder 1 ½-fach-Dosen.

Nachfolgend sind anhand der Zeichnungen mehrere Ausführungsbeispiele der Erfindung näher beschrieben. Es zeigen:
- Figur 1: eine Ausführung des Steckers der Steckvorrichtung,
- Figur 2: die Ansicht des Steckers nach Figur 1 auf die Stirnfläche,
- Figur 3: eine weitere Ausführung des Steckers,
- Figur 4: einen Schnitt entlang der Linie a-b in Figur 3,
- Figur 5: die Frontansicht einer Steckdose der Steckvorrichtung,
- Figur 6: einen Querschnitt durch die Steckdose entlang der Linie c-d in Figur 7,
- Figur 7: die Innenansicht der Steckdose bei abgenommener Abdeckung,
- Figur 8: einen Schnitt durch den Lichtkopf entlang der Linie e-f in Figur 6,
- Figur 9: die Frontansicht einer weiteren Steckdose der Steckvorrichtung,
- Figur 10: die Innenansicht nach Figur 9 ohne Abdeckung,
- Figur 11: einen Längsschnitt durch die Steckdose nach Figur 9,
- Figur 12: eine Zusammenschau von der Steckdose nach Figur 11 und dem Stecker nach Figur 3.

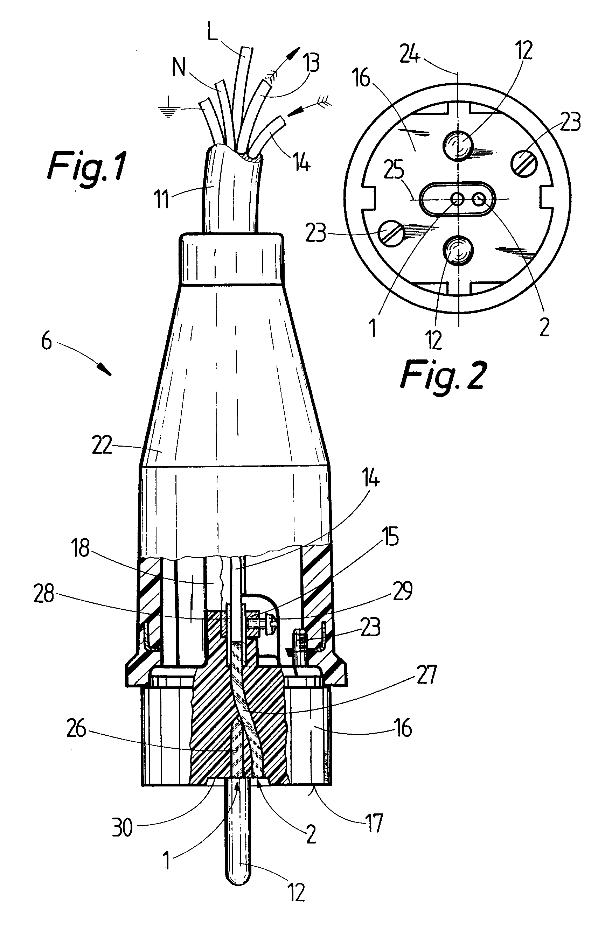

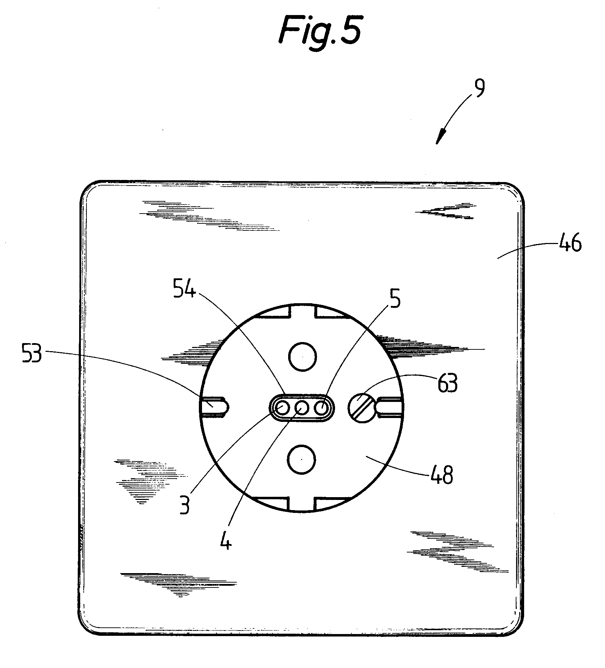

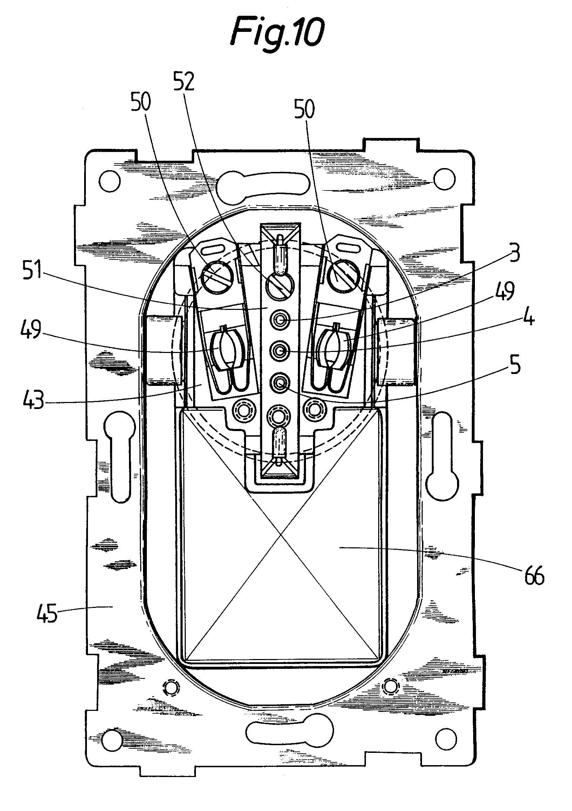

In den Figuren 1 bis 4 der Zeichnungen sind drei Stekkerausführungen und in den Figuren 5 bis 12 zwei Steckdosenausführungen der erfindungsgemäßen Steckvorrichtung dargestellt. Es sei bemerkt, daß jede Steckerausführung mit beiden Steckdosenausführungen wahlweise kuppelbar ist, wobei in jedem Fall die elektrische und die optische Verbindung herstellbar sein soll. Darüber hinaus sollen diese Steckerausführungen auch in eine normale Steckdose, also ohne Lichtöffnungen, passen und umgekehrt soll auch ein normaler Stecker, der keine Lichtöffnungen besitzt, in eine der Steckdosenausführungen passen.

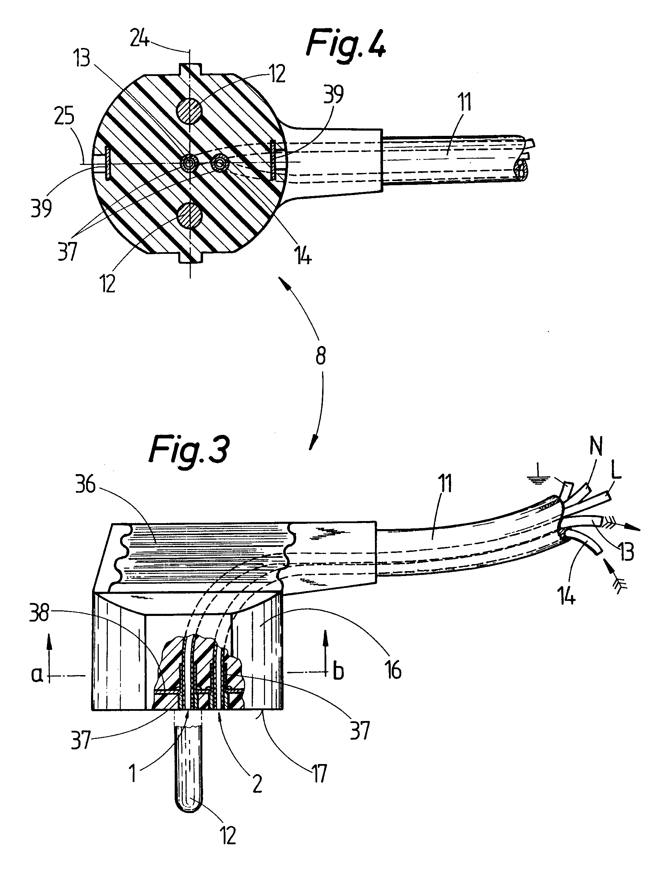

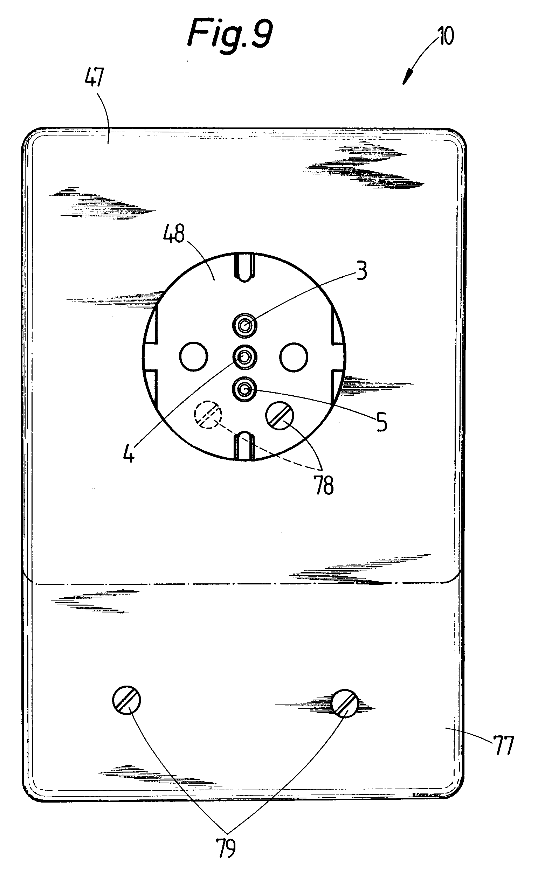

Bei einem Vergleich der Steckerausführung nach Figur 1 und 2 mit der Steckerausführung nach Figur 3 und 4 fällt auf, daß die Abstände der Lichtöffnungen 1, 2 voneinander kleiner sind als in Figur 3 und 4, ferner die Abstände der Lichtöffnungen 3,4,5 voneinander gemäß Figur 5 bis 8 kleiner sind als in Figur 9 bis 12. Selbstverständlich ist unter den vorstehend beschriebenen Voraussetzungen eine Standardisierung der Abstände bei einer gewissen Typenvielfalt erforderlich.

Bei den Steckvorrichtungen, bestehend aus Stecker 6,8 und Steckdose 9,10, handelt es sich um solche Ausführungen, die auf der Basis bereits bestehender Stecksysteme, beispielsweise nach CEE 7, ausgeführt sind und die ohne systembedingte Veränderungen am elektrischen Stecksystem noch zusätzlich mit einem optischen Übertragungssystem ausgestattet sind. Bei dem Stecker 6 nach Figur 1 und 2 handelt es sich um einen wiederanschließbaren Zentralstecker, dementsprechend die Anschlußleitung 11 in Längsrichtung der Steckkontakte 12 in den Stecker 6 eingeführt wird und die elektrischen Adern L, N und Schutzleiter an entsprechende, nicht dargestellte, Anschlußklemmen und die optischen Adern 13,14 an entsprechende Anschlußklemmen 15 anschließbar sind. In Figur 1 ist eine optische Anschlußklemme 15 dargestellt. Der Stecker 6,7 besteht aus einem Profilkörper 16, an dessen Stirnfläche 17 die Steckkontakte 12 (Steckerstifte) angeordnet sind und der an seiner, der Stirnfläche 17 gegenüberliegenden, Seite die mit den Steckkontakten 12 in Verbindung stehenen elektrischen Anschlußklemmen und ferner die optischen An-schlußklemmen 15 trägt. Ferner ist an dieser Seite ein Steg 18 hochgezogen, der an seinem freien Ende als Zugentlastungsvorrichtung 19, hier mit einem festen und beweglichen Schellenteil 20, ausgebildet ist, mit der die Anschlußleitung 11 durch Schrauben festgeklemmt wird. Der Profilkörper 16 ist mit seinem hinteren Teil in eine Haube 22 einsetzbar, die mit Schrauben 23 am Profilkörper 16 lösbar befestigt ist.

Die Lichtöffnungen 1,2 befinden sich an der Stirnfläche 17 des Profilkörpers. Beim Stecker nach Figur 1 sind zwei Lichtöffnungen 1,2 vorhanden. Aus Figur 2 ist entnehmbar, daß die Lichtöffnung 1 sich in der Mitte auf der Verbindungslinie 24 zwischen den beiden Steckkontakten 12 befindet. Die Lichtöffnung 2 ist im Abstand von Lichtöffnung 1 auf der durch die Lichtöffnung 1 verlaufenden Mittelsenkrechten 25 angeordnet. Wie aus Figur 1 hervorgeht, ist die Lichtöffnung 1 gekoppelt mit einem Lichtleiter 26 und die Lichtöffnung 2 ist gekoppelt mit einem Lichtleiter 27. Der Lichtleiter 27 ist, wie ersichtlich, durch den Profilkörper 16 hindurchgeführt und endet in einer Hülse 28, beispielsweise Quetschhülse der Anschlußklemme 15. Der Lichtleiter 26 ist auf die gleiche Art an eine entsprechende, nicht dargestellte, Anschlußklemme 15 geführt und mündet ebenfalls in einer Hülse 28. Beide Anschlußklemmen 15 können nebeneinander an einer Längsseite des Steges 18 angeordnet sein, während die nicht dargestellten elektrischen Anschlußklemmen an der gegenüberliegenden Längsseite des Steges 18 angeordnet werden können, so daß Verwechslungen beim Anschließen der Adern L, N, Schutzleiter und 13,14 nicht vorkommen können. Zum Anschluß der optischen Adern 13,14 an die Klemmen 15 werden die Aderenden 13,14 in die jeweilige Hülse 28 ein-gesteckt und ggf. unter Zugabe eines transparenten Klebers mit der Stirnfläche des jeweiligen Lichtleiters 26,27 verbunden. Ferner kann mit Hilfe eines Anschlußkopfes mit Klemmschraube 29 die Hülse 28 verformt werden, so daß die optischen Adern 13,14 sicher festgeklemmt werden. Die Klebung kann zur Verbesserung der Lichteinkopplung an der Verbindungsstelle noch zusätzlich durchgeführt werden. Die Figur 1 zeigt, daß Licht, das durch die optische Ader 14 in Pfeilrichtung geleitet wird, an der Lichtöffnung 2 aus dem Stecker 6 ausgekoppelt wird und daß dementsprechend Licht, das durch die optische Ader 13 in deren Pfeilrichtung geleitet wird, durch die Lichtöffnung 1 in den Stecker 6 einkoppelbar ist.

Die optischen Lichtleiter 26,27 können aus dem gleichen Material bestehen und gleich ausgebildet sein wie die optischen Adern 13, 14. Übliche Lichtleiter haben Durchmesser zwischen 0,1 bis 1 mm. Für die hier zugrundeliegende Anwendung und verhältnismäßig kurzen Lichtübertragungsstrecken kann bei Einhaltung üblicher Herstellungstoleranzen der Steckvorrichtung bei Lichtleiterdurchmessern von ca. 1 mm auf besondere Koppelelemente an den Lichtöffnungen 1,2 verzichtet werden, d.h. die Stirnflächen der Lichtleiter 26,27 bilden selbst die Lichtöffnungen, wobei ggf. die Stirnflächen poliert oder linsenartig geformt sind. Selbstverständlich können die Lichtöffnungen 1,2 mit fokussierenden Linsen ausgestattet sein, die wesentlich größer im Durchmesser sein können als der Lichtleiter, so daß in diesem Fall ein Versatz der Lichtöffnungen an Stecker und Steckdosen eine verhältnismäßig geringe Lichtdämpfung zur Folge hat. Die Lichtleiter 26,27 sind in den Profilkörper 16 eingebettet oder sind bei der Herstellung des Profilkörpers 16 durch Pressen oder Spritzen von der Formmasse umhüllt.

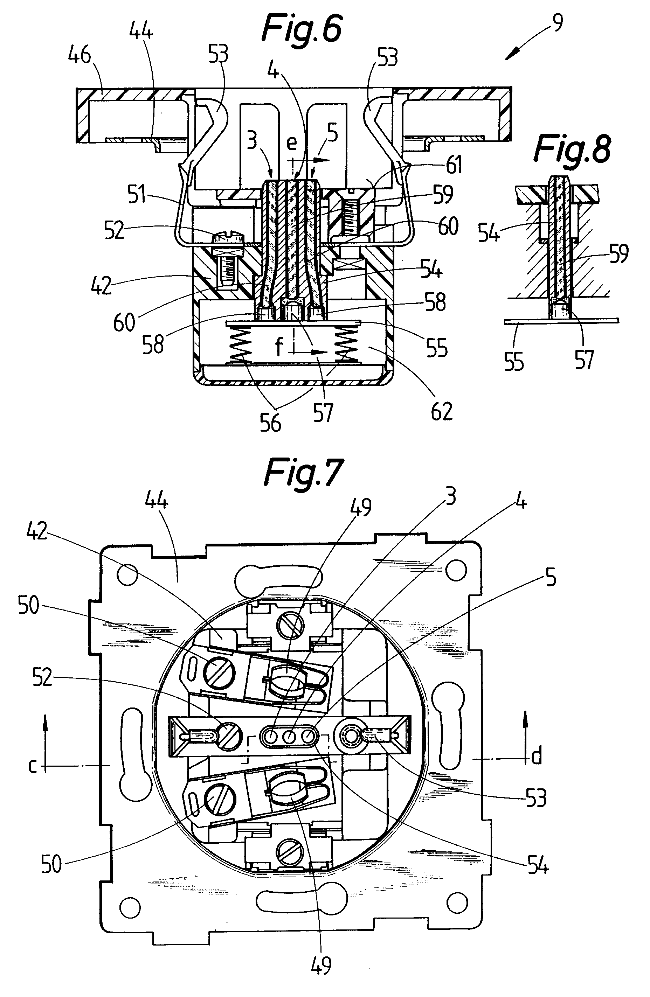

Die Stirnfläche 17 des Steckers 6 besitzt im Bereich der Lichtöffnungen 1,2 eine Vertiefung 30, die die Lichtöffnungen vor Beschädigung schützt oder die in Verbindung mit der Steckdose nach Figur 6 zu einer Verbesserung der Lichtkopplung führt, wie nachfolgend noch beschrieben wird.

Die Figuren 3 und 4 zeigen einen sogenannten Winkelstecker 8, bei dem die Anschlußleitung 11 im Einführbereich des Steckers 8 quer zu den Steckkontakten 12 verläuft. Bei dem Stecker 8 handelt es sich, im Gegensatz zu der Ausführung nach Figur 1 und 2, um einen nicht wiederanschließbaren Stecker, bei dem an dem Profilkörper 16 ein Griffteil 36 einstückig angeformt ist. Sowohl die elektrischen als auch die optischen Anschlüsse befinden sich eingebettet im Profilkörper 16.

Die eingebetteten optischen Anschlüsse bestehen aus Metallhülsen 37, die an einer Einlage 38 justiert und befestigt sind. Bei der Einlage 38 kann es sich um den Mittelsteg eines an sich bekannten Schutzkontaktbügels mit Randkontakten 39 handeln. In die Metallhülsen 37 sind die Enden der optischen Adern 13,14 eingesteckt, wobei die Stirnflächen der Adern 13,14 bündig mit der Stirnfläche 17 des Profilkörpers 16 abschließen. Die Adern 13,14 sind in ihrer Lage durch Zusammendrücken der Metallhülsen 37 fixiert. Auch bei dieser Stekkerausführung kann selbstverständlich eine Linsenkopplung vorgesehen werden, indem die Lichtöffnungen 1,2 als optische Linsen ausgebildet sind. Diese optischen Linsen können in die Metallhülsen 37 eingesetzt werden und einen größeren Durchmesser haben als die optischen Adern 13,14, so daß sich die Lichtdämpfung an der Übergangsstelle von Stecker und Steckdose verringern läßt.

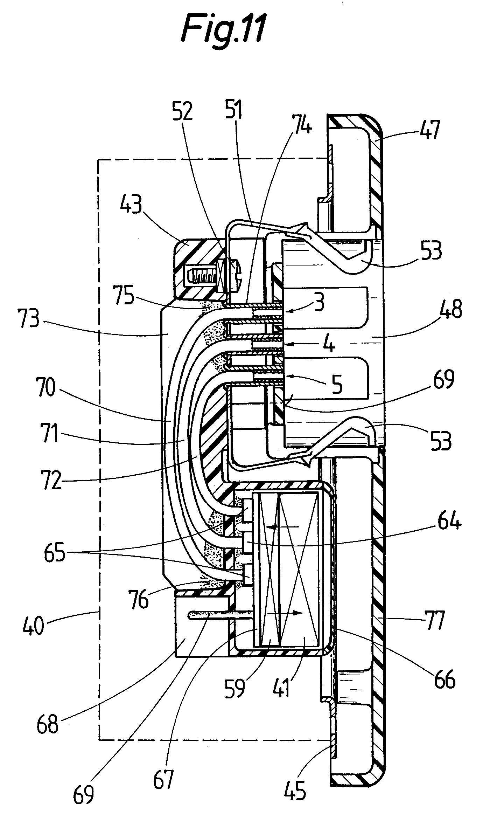

Die vorstehend beschriebenen Stecker 6,8 sind so ausgebildet, daß sie wahlweise in eine der Steckdosen 9,10 eingesteckt werden können. Durch das Einstecken eines Steckers 6,8 in eine der Steckdosen 9,10 wird außer der elektrischen Verbindung auch noch die optische Verbindung hergestellt. Bei den Steckdosen 9,10 handelt es sich um Ausführungen für den Einbau in Dosen, z.B. Wanddosen. In Figur 11 ist eine derartige Dose 40 gestrichelt dargestellt.

Der elektrische Teil der Steckdosen 9,10 basiert auf einer herkömmlichen millionenfach verbreiteten Ausführung. In diesem Steckdosenteil ist der optische Teil der Steckdosen integriert. Ferner ist die Steckdose 10 noch mit einem Busankoppler 41 kombiniert, wie nachfolgend noch beschrieben wird.

Beide Steckdosen 9,10 besitzen jeweils einen Steckdosensockel 42,43 aus Isolierstoff, ein mit dem Steckdosensockel 42,43 verbundenes metallisches Tragorgan 44,45 und eine frontseitige Abdeckung 46,47 mit einem topfförmigen Einsatz 48 zur Aufnahme des Profilkörpers 16 des Steckers 6,8.

Der Steckdosensockel 42,43 trägt die elektrischen Kontakte und Anschlußklemmen, die als mit den Steckkontakten 12 des Steckers komplementäre Kontaktbuchsen 49 mit Anschlußklemmen 50 ausgebildet sind. Als Schutzkontakt dient ein u-förmiger Federbügel 51 mit einer Anschlußklemme 52. Der Schutzkontaktbügel 51 besitzt an den freien Enden Randkontakte 53, die mit den Randkontakten 39 des Steckers zusammenwirken.

Bei der Steckdose nach Figur 5 bis 7 enthält die Steckdose 9 einen Lichtkopf 54, der an einem Träger 55 befestigt ist, der unter der Wirkung einer Federvorrichtung 56 steht. Auf dem Träger 55 befinden sich ein Lichtsender 57 und zwei Lichtempfänger 58 eines optoelektrischen Wandlers 59.

Der Lichtkopf 54 besitzt drei Lichtöffnungen 3,4,5. Von den drei Lichtöffnungen 3,4,5 ist die Lichtöffnung 4 über einen Lichtleiter 59 mit dem Lichtsender 57 gekoppelt und die Lichtöffnungen 3,5 sind über je einen Lichtleiter 60 mit den Lichtempfängern 58 gekoppelt. Der Lichtkopf 54 steht in Einsteckrichtung des Steckers über der Stirnfläche 61 der Steckdose 9 hervor und ist axial beweglich geführt. Beim Einführen des Steckers 6,8 in die Steckdose 9 legt sich der Lichtkopf 54 an der Stirnfläche 17 des Steckers 6,8 an und wird entgegen der Federeinwirkung zurückgedrückt. Dabei kommt eine abstandslose Kopplung der Lichtöffnungen des Stekkers 6,8 mit den Lichtöffnungen 3,4,5 des Lichtkopfes 54 zustande.

Bei dem Stecker 6 wird unabhängig von der Einführstellung des Steckers in der Steckdose 9 die Lichtöffnung 1 des Steckers 6 stets mit der Lichtöffnung 4 der Steckdose 9 gekoppelt. Mit dem Lichtsender 57 wird Licht aus der Lichtöffnung 4 ausgekoppelt und in die Lichtöffnung 1 des Steckers 6 eingekoppelt. Die Lichtöffnung 2 des Steckers 6 wird dagegen in der einen Stellung des Stekkers 6 mit der Lichtöffnung 3 und in der anderen Stellung mit der Lichtöffnung 5 der Steckdose 9 gekoppelt.

Licht, das aus der Lichtöffnung 2 des Steckers 6 ausgekoppelt wird, wird entweder in die Lichtöffnung 3 oder 5 der Steckdose 9 eingekoppelt. Jeweils ein Empfänger 58 des optoelektrischen Wandlers 59 kann die optischen Signale empfangen.

Der Stecker 6 greift mit seiner Vertiefung 30 in den Lichtkopf 54 ein, wodurch eine zusätzliche Seitenzentrierung erfolgt.

Lichtsender 57 und Lichtempfänger 58 der Steckdose 9 sind in einem von den elektrischen Kontakten 49,50,51 der Steckdose 9 getrennten Aufnahmeraum 62 angeordnet, der sich an der, den elektrischen Kontakten gegenüberliegenden, Rückseite des Steckdosensockels 42 befindet und an diesem angeformt ist. Der Aufnahmeraum 62 kann neben den in Figur 6 dargestellten Teilen 55,56,57,58 noch die übrige Schaltungsanordnung des optoelektrischen Wandlers 59, wie Verstärker, enthalten. Die Verbindung der Schaltungsanordnung des optoelektrischen Wandlers 59 mit den Lichtsendern 57 und Lichtempfängern 58 erfolgt über bewegliche, nicht dargestellte, Kontaktverbindungen. Ebenfalls nicht dargestellt sind die vorhandenen Außenanschlüsse des optoelektrischen Wandlers 59 für den Anschluß an eine elektrische Busleitung.

Es sei noch bemerkt, daß die Steckdosenabdeckung 46 mit der Schraube 63 am Steckdosensockel 42 befestigt ist.

Die Steckdose 10 unterscheidet sich von der Steckdose 9 dadurch, daß sie mit dem optoelektrischen Wandler 59 und dem elektrischen Busankoppler 41 zu einer nebeneinander angeordneten Baueinheit kombiniert ist. Der optoelektrische Wandler 59, einschließlich Lichtsender 64 und Lichtempfänger 65, und der Busankoppler 41 sind in einem separaten, an einer, den elektrischen Kontakten 49,50,51 benachbarten, Seite des Steckdosensockels 43 vorgesehenen, hier einstückig angeformten, Gehäuse 66 angeordnet. Die genannten Teile befinden sich auf einer Platine 67, wobei Lichtsender 64 und Lichtempfänger 65 sich an der, dem Busankoppler 41 gegenüberliegenden, Rückseite der Platine 67 befinden. Das Gehäuse 66 besitzt eine Aufnahme 68 für einen Busanschlußstecker 69 des Busankopplers 41.

Die optische Verbindung von den in der vertieft liegenden Stirnfläche 69 der Steckdose 10 befindlichen Licht-Öffnungen 3,4,5 zu dem Lichtsender 64 und dem Lichtempfänger 65 erfolgt über je einen Lichtleiter 70,71,72. Die Lichtleiter 70,71,72 sind an der Rückseite der Steckdose 10 verlegt und durch Wände 73 des Sockels 43 und des Gehäuses 66 geführt und geschützt.

Für die Aufnahme der Lichtleiter 70,71,72 im Bereich der Lichtöffnungen 3,4,5 sind Metallhülsen 74 am Schutzkontakt 51 befestigt und bis zu den Lichtöffnungen 3,4,5 an der vertieft liegenden Stirnfläche 69 hochgezogen. Die Lichtleiter 70,71,72 sind mit jeweils einem Ende in die Hülsen 74 eingesteckt und mit einem Kleber 75 fixiert. Mit den anderen Enden sind die Lichtleiter 70,71,72 mit dem Lichtsender 64 und dem Lichtempfänger 65 gekoppelt und ebenfalls mit einem Kleber 76 fixiert. Hierfür sind nicht näher bezeichnete Öffnungen an der Rückseite des Gehäuses 66 vorgesehen. Das Gehäuse 66 ist frontseitig durch eine Verbreiterung 77 der Abdeckung 47 überdeckt. Die Abdeckung 47 ist im Bereich der vertieft liegenden Stirnfläche 69 mit einer Schraube 78 mit dem Sockel 43 verbunden. Zusätzlich sind noch zwei Befestigungsschrauben 79 zur Verbindung mit dem Tragorgan 45 vorgesehen.

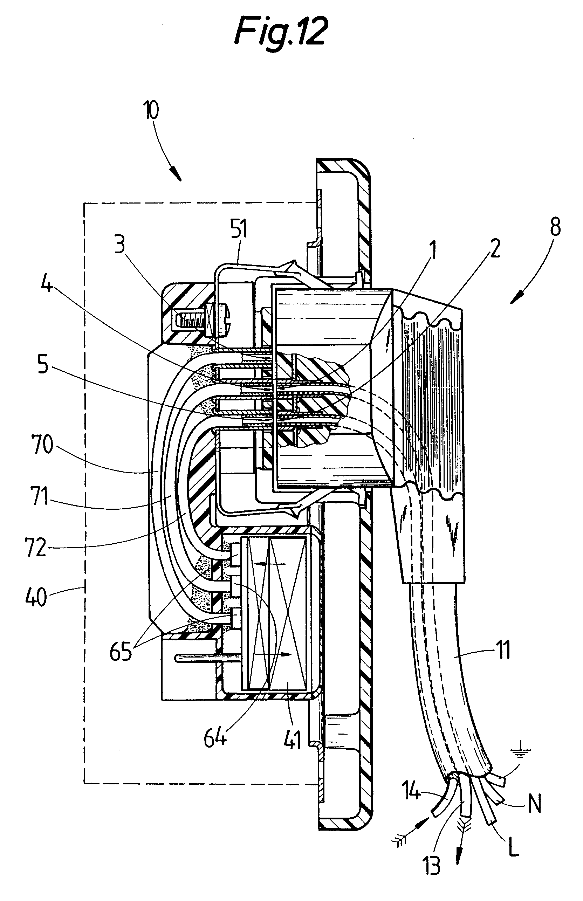

Die Figur 12 zeigt den Stecker 8 eingesteckt in die Steckdose 10. Es ist erkennbar, daß in der dargestellten Stellung des Steckers 8 dessen Lichtöffnungen 4,5 der Steckdose 10 gegenüberliegen. Licht, das mit dem Lichtsender 64 in den Lichtleiter 71 eingekoppelt wird, tritt durch die Lichtöffnung 4 aus und wird durch die Lichtöffnung 1 des Steckers 8 in die optische Ader 13 eingekoppelt. Licht, das mit der optischen Ader 14 des Steckers 8 durch die Lichtöffnung 2 ausgekoppelt wird, wird durch die Lichtöffnung 5 der Steckdose 10 in den Lichtleiter 72 eingekoppelt und zum Empfänger geleitet. Wird der Stecker 8 in einer um 180° gedrehten Stellung in die Steckdose 10 eingesteckt, dann ist die Lichtkopplung zwischen den Lichtöffnungen 2 und 5 unterbrochen. Statt dessen erfolgt dann die Lichtkopplung durch die Lichtöffnung 3 der Steckdose über den Lichtleiter 70 in den komplementären Lichtempfänger 65.

## Patentansprüche

1. Elektrische Steckvorrichtung, bestehend aus den Teilen Steckdose (9,10) und Stecker (6,8) mit einer Konfiguration der elektrischen Kontakte (12,49), die das Einstecken des Steckers in wenigstens zwei Einsteckstellungen erlaubt, wobei der Stecker (6,8) mit einer mehradrigen elektrischen Versorgungsleitung (N,L) und einer wenigstens einadrigen optischen Datenleitung derart verbindbar ist, daß jede der optischen Leitungsadern (13,14) der Datenleitung mit jeweils einer Lichtöffnung (1,2) des Steckers (6,8) gekoppelt ist, durch die Lichtsignale zwischen Steckdose und Stecker ausgetauscht werden, wobei ein Datenaustausch in jeder Einsteckstellung des Stekkers gewährleistet ist,
**dadurch gekennzeichnet,**
daß eines der Teile, nämlich Steckdose (9,10) oder Stecker (6,8), wenigstens eine Lichtöffnung (3,4,5) mehr besitzt als das andere Teil, und daß wenigstens zwei Lichtöffnungen (3,4,5) des einen Teils zum Übertragen von Licht vorgesehen sind, von denen in der einen Einsteckstellung eine Lichtöffnung (3) mit einer Lichtöffnung (2) des anderen Teils (6,8) und in einer anderen Einsteckstellung eine andere Lichtöffnung (5) des einen Teils mit der Lichtöffnung (2) des anderen Teils (6,8) gekoppelt, z.B. in Deckung gebracht, ist, und jede Lichtöffnung (3,4,5) des einen Teils mit einem eigenen Lichtempfänger (58,65) oder Lichtsender (57,64) gekoppelt ist.

2. Elektrische Steckvorrichtung nach Anspruch 1, dadurch gekennzeichnet, daß der Stecker (6,8) eine zentrale Lichtöffnung (1) besitzt, die in jeder Stellung des Steckers (6,8) in der Steckdose (9,10) mit derselben Lichtöffnung (4) der Steckdose gekoppelt, z.B. in Deckung gebracht, ist, und die Lichtöffnung (4) der Steckdose mit einem Lichtsender (57,64) oder Lichtempfänger (58,65) gekoppelt ist, daß der Stecker (6,8) wenigstens eine weitere Lichtöffnung (2) besitzt, die in jeder Stellung des Steckers (6,8) in der Steckdose (9,10) mit einer anderen Lichtöffnung (3,5) der Steckdose (9,10) gekoppelt ist, und die Lichtöffnungen (3,5) der Steckdose mit je einem Lichtempfänger oder Lichtsender (57,58;64,65) eines optoelektrischen Wandlers (59) gekoppelt sind.

3. Elektrische Steckvorrichtung nach Anspruch 1 oder 2, dadurch gekennzeichnet, daß der Stecker (6,8) an seiner Stirnfläche (17) eine in der Mitte zwischen den beiden elektrischen Steckerstiften (12) angeordnete Lichtöffnung (1) aufweist und im Abstand davon wenigstens eine auf der Mittelsenkrechten (25) zwischen den Steckerstiften (12) angeordnete weitere Lichtöffnung (2) vorgesehen ist.

4. Elektrische Steckvorrichtung nach einem der Ansprüche 1-3, dadurch gekennzeichnet, daß die Steckdose (9,10) an ihrer der Stirnfläche (17) des eingesteckten Steckers (6,8) gegenüberliegenden Stirnfläche (61,69) eine zentrale, zwischen den Kontaktbuchsen (49) angeordnete Lichtöffnung (4) aufweist und zwei weitere, im gleichen Abstand davon auf der Mittelsenkrechten zwischen den Steckkontakten (49) angeordnete Lichtöffnungen (3,5) vorgesehen sind, deren Abstände zu der zentralen Lichtöffnung (4) den Lichtöffnungsabständen des Steckers (6,8) entsprechen.

5. Elektrische Steckvorrichtung nach einem der Ansprüche 1-4, dadurch gekennzeichnet, daß Lichtsender (57,64) und Lichtempfänger (58,65) am oder im Sockel (42,43) der Steckdose angeordnet sind.

6. Elektrische Steckvorrichtung nach einem der Ansprüche 1-4, dadurch gekennzeichnet, daß Lichtsender (57,64) und Lichtempfänger (58,65) am oder im Sockel (42,43) der Steckdose angeordnet sind.

7. Elektrische Steckvorrichtung nach einem der Ansprüche 1-6, dadurch gekennzeichnet, daß die Lichtöffnungen (3,4,5) der Steckdose (9,10) über je einen Lichtleiter (59,60;70,71,72) mit dem Lichtsender (57,64) oder Lichtempfänger (58,65) gekoppelt sind.

8. Elektrische Steckvorrichtung nach Anspruch 6 oder 7, dadurch gekennzeichnet, daß Lichtsender (57,64) und Lichtempfänger (58,65) als Teile eines optoelektrischen Wandlers (59) ausgebildet sind, der sich in dem Aufnahmeraum (62) befindet.

9. Elektrische Steckvorrichtung nach Anspruch 8, dadurch gekennzeichnet, daß der optoelektrische Wandler (59) mit einem Busankoppler (41) des elektrischen Busleitungssystems verbunden ist.

10. Elektrische Steckvorrichtung nach einem der Ansprüche 2-9, dadurch gekennzeichnet, daß die Steckdose (10), der optoelektrische Wandler (59) und der Busankoppler (41) nebeneinander angeordnet in einer Baueinheit angeordnet sind.

11. Elektrische Steckvorrichtung nach einem der Ansprüche 1-10, dadurch gekennzeichnet, daß Lichtsender (57,64) und Lichtempfänger (58,65) an einem in Steckrichtung verschiebbaren und unter Federwirkung stehenden Träger (55) angeordnet sind, der mit einem die Lichteintritts- und Lichtaustrittsöffnungen (3,4,5) enthaltenden Lichtkopf (54) über die Stirnfläche (61) der Steckdose (9) hinausragt.

12. Elektrische Steckvorrichtung nach einem der Ansprüche 9-11, dadurch gekennzeichnet, daß der optoelektrische Wandler (59) einschließlich Lichtsender (57,64) und Lichtempfänger (58,65) sowie der Busankoppler (41) in einem separaten Gehäuse (66) angeordnet sind.

13. Elektrische Steckvorrichtung nach Anspruch 12, dadurch gekennzeichnet, daß das Gehäuse (66) an einer den Steckkontakten (49) des Steckdosensockels (42,43) benachbarten Seite des Steckdosensockels angeordnet angeformt ist.

14. Elektrische Steckvorrichtung nach einem der Ansprüche 1-13, dadurch gekennzeichnet, daß die Kopplung zwischen den Lichteintritts- und Lichtaustrittsöffnungen der Steckdose (3,4,5) und den Lichtsendern und Lichtempfängern (57,58,64,65) durch an der Rückseite des Steckdosensockels (43) und des Gehäuses (66) verlegte Lichtleiter (70,71,72) erfolgt.

15. Elektrische Steckvorrichtung nach einem der Ansprüche 12-14, dadurch gekennzeichnet, daß das Gehäuse (66) frontseitig durch eine Verbreiterung (77) der Steckdosenabdeckung (47) überdeckt ist.

16. Elektrische Steckvorrichtung nach einem der Ansprüche 1-15, dadurch gekennzeichnet, daß der Sockel (43) der Steckdose (9,10) mit einem Tragorgan (45) zum Einbau in eine Wanddose (40) verbunden ist.

17. Steckdose einer elektrischen Steckvorrichtung nach einem der vorhergehenden Ansprüche, mit mindestens zwei Lichtöffnungen (3,5), die jeweils mit einem eigenen Lichtempfänger (58,59) oder Lichtsender (57,64) gekoppelt und symmetrisch auf beiden Seiten der die Steckkontakte (49) verbindenden Geraden angeordnet sind.
